# FASCICULE DE BREVET EUROPEEN

(11) **EP 0 596 794 B1**
(45) Date de publication et mention de la délivrance du brevet: **08.04.1998**
(21) Numéro de dépôt: 93402689.9
(22) Date de dépôt: 02.11.1993
(51) Int. Cl.: H01M 10/50

(54) **Batterie d'accumulateurs thermorégulée, notamment pour véhicule électrique**
Wärmregelbare Akkumulatorenbatterie, insbesondere für Elektrofahrzeug
Heat-regulated accumulators battery, in particular for electric vehicle

(30) Priorité: 02.11.1992 FR 9213086
(43) Date de publication de la demande: 11.05.1994
(73) Titulaire: COMPAGNIE EUROPEENNE D'ACCUMULATEURS, F-92110 Clichy (FR)
(72) Inventeur: Holland, Gunther, D-6470 Büdingen (DE); Jeremias, Günter, D-6470 Büdingen (DE)
(74) Mandataire: Leszczynski, André

(56) Documents cités:
- DE-A- 2 635 427
- DE-U- 9 002 249
- DE-U- 9 210 384

## Description

La présente invention est relative à une batterie d'accumulateurs électriques thermorégulée.

Le développement récent des véhicules à propulsion électrique suscite depuis de nombreuses années des recherches dans le domaine des batteries d'accumulateurs électriques.

On cherche notamment à optimiser les conditions de fonctionnement de tels accumulateurs, de sorte que ces derniers restituent le maximum d'énergie électrique lors de l'utilisation du véhicule et qu'ils aient une durée de vie la plus longue possible.

On sait à cet égard qu'il est préférable de maintenir les batteries d'accumulateurs à une température sensiblement constante, qui correspond à leur température de fonctionnement optimal, tant pendant leur charge que pendant leur décharge et quelles que soient les conditions de température extérieure.

On sait également qu'il est primordial d'homogénéiser les températures de toutes les batteries d'un même véhicule, notamment lors de la phase de charge des accumulateurs.

Lors de la charge, toutes les batteries reçoivent un même courant électrique pendant une même période de temps. Il faut donc qu'elles aient les mêmes aptitudes à emmagasiner de l'énergie pour éviter que certaines batteries soient encore insuffisamment chargées alors que d'autres sont déjà en surcharge.

Or, les batteries d'un véhicule ne sont pas toutes soumises aux mêmes conditions de température.

D'une part, les batteries sont souvent réunies en grand nombre dans un même bac. Dans ce cas, celles qui se trouvent à la périphérie du bac subissent un refroidissement plus important que celles situées au centre du bac.

D'autre part, les batteries peuvent être disséminées en différents endroits du véhicule, pour des raisons d'encombrement et de répartition des masses.

Dans cette optique d'homogénéisation des températures des batteries d'un véhicule, la société Sonnenschein France S.A., filiale de la société déposante, effectue des recherches depuis de nombreuses années et a déjà déposé le 29 Avril 1991 un modèle d'utilité en Allemagne sous le n° G 9105260.2.

On connaît, notamment de ce document, des dispositifs qui sont disposés extérieurement à des batteries et qui permettent à un fluide caloporteur de circuler au voisinage des parois des batteries en réalisant des échanges thermiques avec celles-ci, pour maintenir leur température dans un intervalle de valeurs prédéterminé.

Mais de tels dispositifs sont d'un prix de revient relativement élevé et leur efficacité n'est pas toujours satisfaisante.

La présente invention vise à fournir une nouvelle enceinte de batterie d'accumulateurs qui soit simple et économique et qui comporte, de par sa fabrication, tous les éléments permettant de faire circuler un fluide caloporteur à son voisinage, sans qu'il soit nécessaire d'avoir recours à des dispositifs externes.

La présente invention peut être mise en oeuvre pour des batteries utilisant divers couples électrochimiques, par exemple des batteries au plomb, nickel-cadmium, lithium ou toute autre batterie alcaline.

La présente invention a pour objet une enceinte de batterie d'accumulateurs comportant au moins une paroi au voisinage de laquelle des moyens permettent de faire circuler un fluide caloporteur, caractérisée par le fait que les moyens pour faire circuler le fluide caloporteur comportent sur ladite paroi une paroi additionnelle qui s'étend sensiblement parallèlement à ladite paroi de l'enceinte et dont la périphérie est réunie de manière étanche à ladite paroi de l'enceinte, de sorte qu'un espace pour le fluide caloporteur est délimité entre la paroi de l'enceinte et ladite paroi additionnelle, et au moins un orifice d'entrée et un orifice de sortie débouchant dans ledit espace pour permettre la circulation du fluide caloporteur.

Selon l'invention, ladite au moins une paroi de l'enceinte recevant la paroi additionnelle peut être une paroi latérale, la paroi supérieure ou la paroi de fond de l'enceinte.

Dans la pratique, on choisit de préférence la ou les parois de l'enceinte qui présentent la plus grande surface, de manière à faciliter les échanges thermiques entre l'intérieur de l'enceinte et le fluide caloporteur.

Ainsi, pour une enceinte parallélépipédique dont la grande dimension est la hauteur, les deux plus grandes parois latérales, et éventuellement les deux plus petites parois latérales, reçoivent avantageusement une paroi additionnelle.

En revanche, pour une enceinte de faible hauteur, il peut être plus avantageux d'équiper d'une paroi additionnelle la paroi de fond de l'enceinte, voire sa paroi supérieure.

Avantageusement, la paroi additionnelle est réunie de manière étanche à la paroi de l'enceinte par collage ou soudure.

De préférence, on utilise comme fluide caloporteur un liquide tel que de l'eau, éventuellement mélangée à un antigel.

Dans un mode de réalisation préféré de l'invention, la paroi additionnelle comporte à sa périphérie des bords repliés permettant sa fixation sur la paroi de l'enceinte.

Dans une variante préférée de ce mode de réalisation, la seconde paroi additionnelle comporte des nervures faisant saillie du côté de ses bords repliés, et présentant sensiblement la même épaisseur que ces derniers pour définir à l'intérieur de l'espace un chemin de circulation forcée pour le fluide caloporteur.

De préférence, les nervures sont disposées sensiblement parallèlement et en quinconce pour constituer des chicanes.

Dans un mode de réalisation préféré de l'invention, l'enceinte de la batterie, ainsi que la paroi additionnelle, sont réalisées en une même matière plastique, par exemple en polypropylène chargé ou en ABS.

Avantageusement, les orifices d'entrée et de sortie du fluide caloporteur sont prolongés par des manchons de raccordement qui permettent de relier entre elles plusieurs enceintes de batteries, en montage série ou parallèle.

Dans le but de mieux faire comprendre l'invention on va en décrire maintenant un mode de réalisation donné à titre d'exemple non limitatif de la portée de l'invention en référence au dessin annexé dans lequel :
- la figure 1 est une vue en perspective d'une enceinte de batterie selon un premier mode de réalisation de l'invention,
- la figure 2 représente une paroi additionnelle de l'enceinte de batterie de la figure 1, vue de l'intérieur,
- la figure 3 est une vue en coupe selon III-III de la figure 2,
- la figure 4 est une vue analogue à la figure 2 d'une variante de paroi additionnelle selon l'invention et
- la figure 5 représente en perspective une enceinte de batterie selon un second mode de réalisation de l'invention.

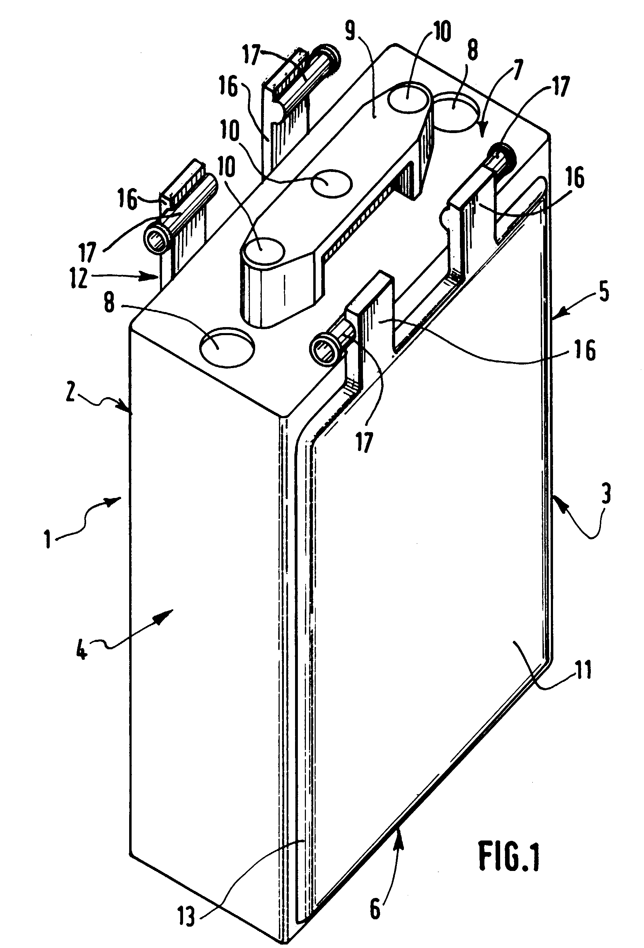

Sur la figure 1, on a représenté en perspective une enceinte de batterie d'accumulateurs 1, de forme générale parallélépipédique et dont la grande dimension est la hauteur, qui comporte deux grandes faces latérales 2 et 3, deux petites faces latérales 4 et 5, un fond 6, et une paroi supérieure 7.

L'enceinte 1 est réalisée en matière plastique, par exemple en polypropylène chargé ou en ABS.

La paroi supérieure 7 de l'enceinte comporte deux orifices 8 débouchant à l'intérieur de l'enceinte et permettant le passage de bornes électriques, non représentées, qui sont reliées à des accumulateurs logés à l'intérieur de l'enceinte.

La paroi supérieure 7 comporte également une partie saillante 9 dans laquelle sont prévus trois orifices 10 débouchant également à l'intérieur de l'enceinte et qui sont destinés à recevoir des bouchons non représentés qui jouent le rôle de soupapes.

L'enceinte 1 représentée ici est destinée à constituer une batterie étanche, dite sans entretien.

Conformément à l'invention, l'enceinte 1 est munie, sur chacune de ses deux grandes faces latérales 2 et 3, d'une paroi additionnelle 11 et respectivement 12.

Bien que, dans le mode de réalisation représenté ici, l'enceinte ne comporte que deux parois additionnelles 11 et 12 sur ses grandes faces latérales 2 et 3, il est clair que, selon l'invention,l'enceinte pourrait comporter des parois additionnelles également sur ses petites faces latérales 4 et 5.

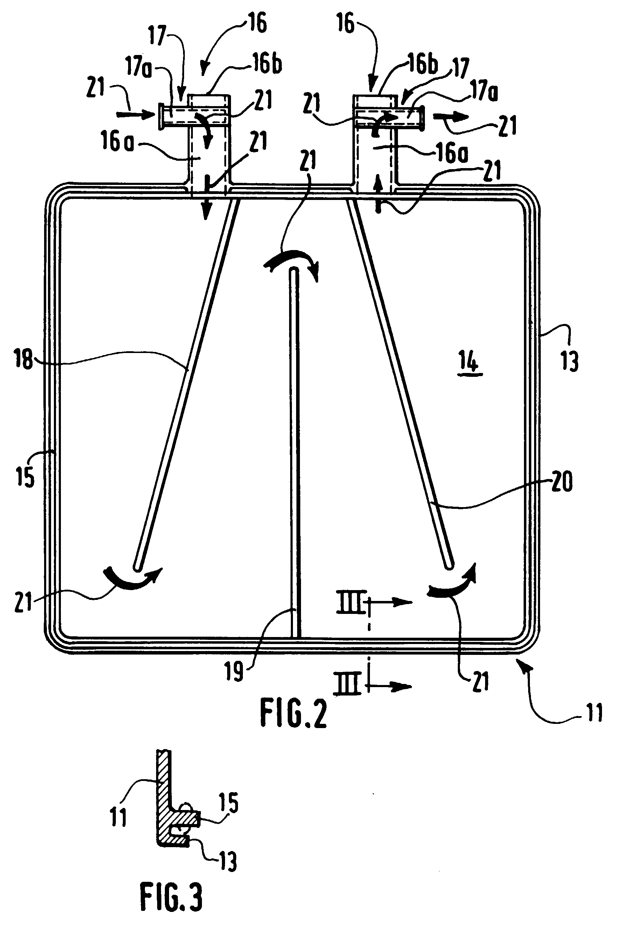

Les deux parois additionnelles 11 et 12 étant rigoureusement identiques, la suite de la description ne portera que sur la paroi additionnelle 11 qui est visible de l'intérieur sur la figure 2.

Conformément à l'invention, la paroi additionnelle 11 s'étend parallèlement à la paroi 3 de l'enceinte 1 en étant réunie à cette dernière par sa périphérie.

Le bord périphérique 13 de la paroi 11 additionnelle est orienté vers l'intérieur et présente une épaisseur relativement réduite par rapport à la hauteur et à la largeur de l'enceinte 1.

De ce fait, le volume 14 qui est délimité entre la face 3 de l'enceinte 1 et la paroi additionnelle 11, est relativement petit.

Une nervure interne 15 s'étend parallèlement au bord 13 de la paroi additionnelle 11.

Dans le mode de réalisation représenté, la paroi additionnelle 11 est réunie à l'enceinte 1 par soudure de sa nervure 15 sur la face latérale 3 de l'enceinte 1.

On comprend alors que le rôle du bord 13 est de masquer le bourrelet qui se forme au niveau du contact entre la nervure 15 et la face 3 de l'enceinte lors de la soudure.

Sur la coupe III-III, on remarque qu'avant réalisation de la soudure, la nervure 15 fait saillie au-delà du bord 13, ce qui permet de compenser le fluage de matière qui se produit lors de la soudure, la nervure 15 prenant alors la forme représentée en traits interrompus.

La paroi additionnelle 11 comporte, à sa partie supérieure, deux cheminées 16, dont les conduits intérieurs 16a débouchent verticalement dans l'espace 14, et dont les extrémités supérieures 16b sont obturées par exemple par soudure.

Chaque cheminée 16 comporte un manchon de raccordement 17 dont le conduit intérieur 17a communique avec le conduit intérieur 16a de la cheminée 16.

Des nervures 18, 19 et 20 font saillie sur la face intérieure de la paroi additionnelle 11 en s'étendant depuis l'un des bords supérieur ou inférieur de cette dernière, en direction du bord opposé.

Comme on le voit sur la figure 2, les nervures 18, 19 et 20 sont disposées en quinconce et définissent une chicane qui force le fluide à suivre un parcours déterminé à l'intérieur de l'espace 14.

Des flèches 21 matérialisent schématiquement le parcours du fluide caloporteur.

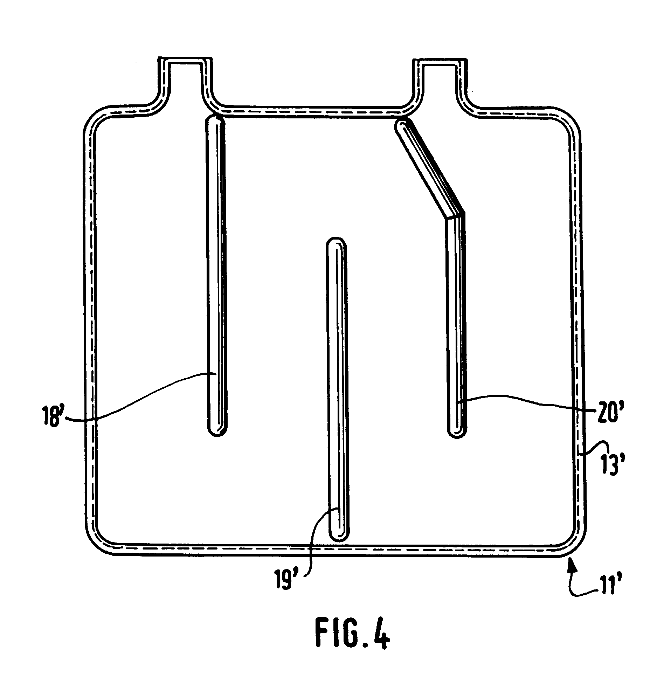

La figure 4 représente une variante d'une paroi additionnelle 11', dans laquelle les nervures 18', 19' et 20' s'étendent sensiblement verticalement.

A la différence de la paroi additionnelle 11 de la figure 2, la paroi additionnelle 11' de la figure 4 comporte un bord périphérique 13' qui ne joue pas le rôle d'un cache, la paroi additionnelle 11' étant destinée à être réunie à la face 3 de l'enceinte 1 par collage du bord 13'.

Selon l'invention, les nervures 18, 19, 20, 18', 19', 20' peuvent être simplement appliquées contre la paroi 3 de l'enceinte.

Elles peuvent également être soudées ou collées à la paroi de l'enceinte, ce qui améliore à la fois la circulation du fluide caloporteur et la résistance mécanique de la paroi additionnelle ainsi solidarisée à l'enceinte.

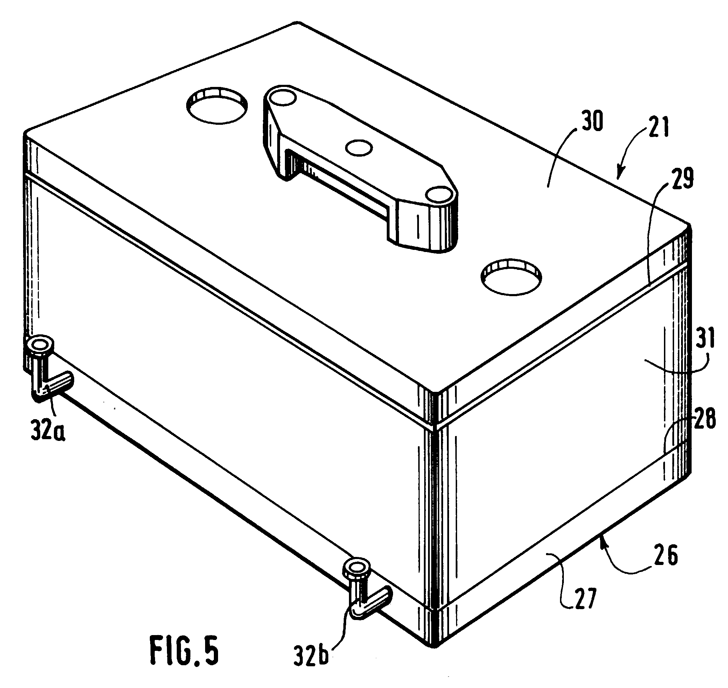

La figure 5 illustre un second mode de réalisation de l'invention dans lequel une enceinte 21 possède, sur sa paroi de fond 26, une paroi additionnelle 27 selon l'invention.

La géométrie de l'enceinte 21, qui présente une hauteur relativement faible en comparaison avec sa longueur et sa largeur, conduit en effet naturellement à préférer la paroi de fond 26 comme paroi destinée à recevoir une paroi additionnelle 27.

En outre, des essais réalisés avec une enceinte de ce type ont révélé que c'est dans la partie inférieure de l'enceinte que se situe la plus grande quantité de chaleur générée par les accumulateurs.

Cette configuration présente également l'avantage que le bord périphérique 28 de la paroi additionnelle 27 peut être aisément soudé à la paroi 26, à l'aide du même outillage que celui utilisé pour souder le bord périphérique 29 du couvercle 30 de l'enceinte au corps 31 de cette dernière.

De plus, du fait que le bord 28 de la paroi additionnelle 27 se trouve dans une partie peu visible de l'enceinte 21, il n'est pas nécessaire de dissimuler la ligne de soudure, ni même d'en effectuer l'ébavurage.

La paroi additionnelle 27 comporte deux conduits coudés 32a et 32b qui constituent les orifices d'entrée et de sortie permettant la circulation du fluide caloporteur entre la paroi de fond 26 et la paroi additionnelle 27.

Comme précédemment illustré, la paroi additionnelle 27 comporte, sur sa face en regard de la paroi de fond 26, des nervures non représentées qui définissent un parcours pour le fluide caloporteur.

Pour la clarté du dessin, on a représenté les conduits 32a et 32b sur une même face de l'enceinte 21 mais il est clair que ces conduits, qui pourraient d'ailleurs présenter une forme différente, peuvent être situés sur d'autres faces de l'enceinte.

On comprend qu'une enceinte selon l'invention présente l'avantage de favoriser les échanges thermiques entre un fluide caloporteur et l'intérieur d'une batterie du fait que le fluide n'est isolé de l'intérieur de la batterie que par une seule paroi.

Il est bien entendu que le mode de réalisation qui vient d'être décrit ne présente aucun caractère limitatif et qu'il pourra recevoir toutes modifications désirables sans sortir pour cela du cadre de l'invention.

En particulier, il est clair que la paroi additionnelle qui a été illustrée ici sur deux parois latérales ou sur la paroi de fond de l'enceinte pourrait également être prévue, selon l'invention, sur toutes les faces latérales ou sur la face supérieure de l'enceinte.

## Revendications

1. Enceinte de batterie d'accumulateurs, comportant au moins une paroi au voisinage de laquelle des moyens permettent de faire circuler un fluide caloporteur, caractérisée par le fait que les moyens pour faire circuler le fluide caloporteur comportent sur ladite paroi (3) une paroi additionnelle (11) qui s'étend sensiblement parallèlement à ladite paroi (3) de l'enceinte (1) et dont la périphérie (13) est réunie de manière étanche à ladite paroi (3) de l'enceinte (1) de sorte qu'un espace (14) pour le fluide caloporteur est délimité entre la paroi (3) de l'enceinte (1) et ladite paroi additionnelle (11) et au moins un orifice d'entrée (16) et un orifice de sortie (16) débouchant dans ledit espace (14) pour permettre la circulation du fluide caloporteur.

2. Enceinte selon la revendication 1, caractérisée par le fait que la paroi additionnelle (11) est réunie à la paroi (3) de l'enceinte (1) par collage ou soudure.

3. Enceinte selon l'une quelconque des revendications 1 et 2, caractérisé par le fait que la paroi additionnelle (11) et l'enceinte (1) sont réalisées en matière plastique.

4. Enceinte selon l'une quelconque des revendications 1 à 3, caractérisée par le fait que la paroi additionnelle (11) comporte à sa périphérie des bords repliés (13).

5. Enceinte selon la revendication 4, caractérisée par le fait que la paroi additionnelle (11) comporte une nervure interne (15) qui s'étend parallèlement à ses bords repliés (13).

6. Enceinte selon l'une quelconque des revendications 1 à 5, caractérisée par le fait que la paroi additionnelle (11) comporte des nervures (18, 19, 20) faisant saillie du côté de ses bords repliés (13) et présentant sensiblement la même épaisseur que ces derniers.

7. Enceinte selon la revendication 6, caractérisée par le fait que les nervures (18,19,20) sont disposées sensiblement parallèlement et en quinconce pour constituer des chicanes.

8. Enceinte selon l'une quelconque des revendications 1 à 7, caractérisée par le fait que les orifices (16) d'entrée et de sortie du fluide caloporteur sont prolongés par des manchons de raccordement (17).

9. Enceinte selon l'une quelconque des revendications 1 à 8, caractérisée par le fait qu'elle comporte au moins une paroi additionnelle (11) sur au moins l'une de ses parois latérales (3).

10. Enceinte selon l'une quelconque des revendications 1 à 8, caractérisée par le fait qu'elle comporte une paroi additionnelle (27) sur sa paroi de fond (26).

11. Enceinte selon l'une quelconque des revendications 1 à 8, caractérisée par le fait qu'elle comporte une paroi additionnelle sur sa face supérieure.

12. Enceinte selon l'une quelconque des revendications précédentes, caractérisée par le fait qu'elle est destinée à constituer une batterie étanche.

13. Enceinte selon l'une quelconque des revendications précédentes, caractérisée par le fait qu'elle est destinée à constituer une batterie électrochimique utilisant le plomb, le nickel-cadmium, le lithium ou tout autre alcalin.

## Patentansprüche

1. Behälter für eine Akkumulatorbatterie, mit mindestens einer Wand, in deren Nähe Mittel ein Wärmeträgerfluid umlaufen lassen, dadurch gekennzeichnet, daß die Mittel, um ein Wärmeträgerfluid umlaufen zu lassen, auf dieser Wand (3) eine zusätzliche Wand (11) aufweisen, die sich im wesentlichen parallel zur Wand (3) des Behälters (1) erstreckt und deren Rand (13) dicht mit der Wand (3) des Behälters (1) verbunden ist, so daß sich ein Raum (14) für das Wärmeträgerfluid zwischen der Wand (3) des Behälters (1) und der zusätzlichen Wand (11) ergibt, und daß mindestens eine Einlaßöffnung (16) und eine Auslaßöffnung (16) in diesen Raum (14) münden, um den Fluidumlauf zu ermöglichen.

2. Behälter nach Anspruch 1, dadurch gekennzeichnet, daß die zusätzliche Wand (11) mit der Wand (3) des Behälters (1) durch Kleben oder Verschweißen verbunden ist.

3. Behälter nach einem beliebigen der Ansprüche 1 und 2, dadurch gekennzeichnet, daß die zusätzliche Wand (11) und der Behälter (1) aus Kunststoffmaterial bestehen.

4. Behälter nach einem beliebigen der Ansprüche 1 bis 3, dadurch gekennzeichnet, daß die zusätzliche Wand (11) an ihrer Peripherie umgebogene Ränder (13) besitzt.

5. Behälter nach Anspruch 4, dadurch gekennzeichnet, daß die zusätzliche Wand (11) eine innere Rippe (15) aufweist, die sich parallel zu den umgebogenen Rändern (13) erstreckt.

6. Behälter nach einem beliebigen der Ansprüche 1 bis 5, dadurch gekennzeichnet, daß die zusätzliche Wand (11) Rippen (18, 19, 20) aufweist, die auf seiten der umgebogenen Ränder (13) vorstehen und im wesentlichen dieselbe Dicke wie diese besitzen.

7. Behälter nach Anspruch 6, dadurch gekennzeichnet, daß die Rippen (18, 19, 20) im wesentlichen parallel und gegeneinander versetzt verlaufen, um Schikanen zu bilden.

8. Behälter nach einem beliebigen der Ansprüche 1 bis 7, dadurch gekennzeichnet, daß die Einlaß- und Auslaßöffnungen (16) für das Wärmeträgerfluid in Anschlußstutzen (17) übergehen.

9. Behälter nach einem beliebigen der Ansprüche 1 bis 8, dadurch gekennzeichnet, daß er mindestens eine zusätzliche Wand (11) auf mindestens einer seiner Seitenwände (3) aufweist.

10. Behälter nach einem beliebigen der Ansprüche 1 bis 8, dadurch gekennzeichnet, daß er eine zusätzliche Wand (27) unter seinem Boden (26) aufweist.

11. Behälter nach einem beliebigen der Ansprüche 1 bis 8, dadurch gekennzeichnet, daß er eine zusätzliche Wand auf seiner Oberseite aufweist.

12. Behälter nach einem beliebigen der vorhergehenden Ansprüche, dadurch gekennzeichnet, daß er eine dichte Batterie bilden soll.

13. Behälter nach einem beliebigen der vorhergehenden Ansprüche, dadurch gekennzeichnet, daß er eine elektrochemische Batterie bilden soll, die Blei, Nickel-Kadmium, Lithium oder ein anderes Alkalimetall verwendet.

## Claims

1. Enclosure for accumulator battery having at least one wall in the vicinity of which means make it possible to circulate a coolant, characterized in that the means for circulating the coolant comprise on the said wall (3), an additional wall (11) extending substantially parallel to the said wall (3) of the enclosure (1) and whose periphery (13) is tightly joined to the said wall (3) of the enclosure (1), so that a space (14) for the coolant is defined between the wall (3) of the enclosure (1) and the said wall (11) and at least one inlet (16) and an outlet (16) issue into said space (14) to permit the circulation of the coolant.

2. Enclosure according to claim 1, characterized in that the additional wall (11) is joined to the wall (3) of the enclosure (1) by bonding or welding.

3. Enclosure according to either of the claims 1 and 2, characterized in that the additional wall (11) and the enclosure (1) are made from a plastics material.

4. Enclosure according to one of the claims 1 to 3, characterized in that the additional wall (11) has bent up edges (13) on its periphery.

5. Enclosure according to claim 4, characterized in that the additional wall (11) has an internal rib (15) extending parallel to its bent up edges (13).

6. Enclosure according to any one of the claims 1 to 5, characterized in that the additional wall (11) has ribs (18, 19, 20) projecting on the side of its bent up edges (13) and having substantially the same thickness as the latter.

7. Enclosure according to claim 6, characterized in that the ribs (18, 19, 20) are arranged substantially parallel and in staggered manner in order to form baffles.

8. Enclosure according to any one of the claims 1 to 7, characterized in that the inlet and outlet (16) for the coolant are extended by coupling sleeves (17).

9. Enclosure according to any one of the claims 1 to 8, characterized in that it has at least one additional wall (11) on at least one of its side walls (3).

10. Enclosure according to any one of the claims 1 to 8, characterized in that it has an additional wall (27) on its bottom wall (26).

11. Enclosure according to any one of the claims 1 to 8, characterized in that it has an additional wall on its upper face.

12. Enclosure according to any one of the preceding claims, characterized in that it is intended to form a tight battery.

13. Enclosure according to any one of the preceding claims, characterized in that it is intended to form an electrochemical battery using lead, nickelcadmium, lithium or any other alkali.
